(19) **Europäisches Patentamt**
**European Patent Office**
**Office européen des brevets**

(11) Numéro de publication : **0 226 478 B1**

(12) **FASCICULE DE BREVET EUROPEEN**

(45) Date de publication du fascicule du brevet :
**02.01.91 Bulletin 91/01**

(51) Int. Cl.⁵ : **B01D 29/39**

(21) Numéro de dépôt : **86402212.4**

(22) Date de dépôt : **07.10.86**

(54) **Filtre pour liquides chargés de particules solides et installation de filtration comprenant un tel filtre.**

(30) Priorité : **17.10.85 FR 8515428**

(43) Date de publication de la demande :
**24.06.87 Bulletin 87/26**

(45) Mention de la délivrance du brevet :
**02.01.91 Bulletin 91/01**

(84) Etats contractants désignés :
**AT BE CH DE ES GB GR IT LI LU NL SE**

(56) Documents cités :
**AU-B- 413 814**
**DE-C- 895 145**
**GB-A- 760 272**
**US-A- 2 612 236**
**US-A- 3 143 503**
**US-A- 3 354 620**
**US-A- 3 679 061**

(73) Titulaire : **Gaudfrin, Guy**
**6, allée du Bec de Canard Golf de**
**Saint-Nom-la-Bretéche**
**F-78860 Saint-Nom-la-Bretéche (FR)**

(72) Inventeur : **Gaudfrin, Guy**
**6, allée du Bec de Canard Golf de**
**Saint-Nom-la-Bretéche**
**F-78860 Saint-Nom-la-Bretéche (FR)**

(74) Mandataire : **Clanet, Denis et al**
**Cabinet Beau de Loménie 55, rue**
**d'Amsterdam**
**F-75008 Paris (FR)**

## Description

La présente invention se rapporte à un filtre pour liquides chargés de particules solides et à une installation de filtration comprenant un tel filtre, ou plusieurs.

Dans de nombreuses industries, la séparation des résidus ou particules solides présents dans un liquide est effectuée de plus en plus souvent par filtration, de préférence aux techniques de décantation qui nécessitent des installations volumineuses et des temps de décantation excessifs, ou de préférence aux techniques de centrifugation qui n'atteignent pas le degré de séparation recherché et sont rendues onéreuses par l'énergie et l'entretien nécessaires.

Si le principe de base de la filtration, qui consiste à provoquer le passage du liquide à travers un média filtrant dont les orifices permettent le passage du liquide mais empêchent celui des particules, est simple, son application rencontre maintes difficultés.

On connaît du document US-A-3 679 061 un filtre conforme au préambule de la revendication 1.

En premier lieu, la résistance à l'écoulement de liquide due non seulement au média filtrant, mais également à la couche de particules accumulées contre ce dernier, couche communément appelée "gâteau", oblige à conférer une certaine pression au liquide au moyen de pompes qui consomment une énergie d'autant plus importante que la pression nécessaire est élevée. Bien entendu on procède de manière cyclique à l'élimination de ce gâteau lorsqu'il atteint une certaine épaisseur, pour que sa résistance ait une valeur moyenne acceptable.

Cette élimination du gâteau peut être effectuée par contre-courant de liquide en renvoyant à contresens, sous pression ou par simple gravité, une partie du liquide déjà filtré dit "filtrat" à travers le média filtrant, ce qui décolle le gâteau qui tombe alors sous son propre poids au fond de la cuve du filtre, d'où il est évacué.

Par ce mode opératoire, on est amené à filtrer à nouveau une partie du liquide déjà filtré, ce qui peut représenter une dépense appréciable. On note également que si l'on cherche à récupérer les matières solides accumulées, celles-ci sont alors accompagnées d'une proportion notable de liquide qu'il convient d'éliminer par des opérations ultérieures, donc au détriment du coût du processus.

Bien entendu, pendant cette élimination du gâteau, la filtration est stoppée pendant un temps variable selon les difficultés rencontrées. En effet, si le décollement de la majeure partie du gâteau ne pose pas de problèmes particuliers, il peut subsister des zones où des plaques de gâteau sont relativement bien accrochées au média filtrant et l'on doit poursuivre la circulation à contre-courant pendant un temps suffisant pour parvenir à décrocher ces plaques récalcitrantes. Bien que l'on sache provoquer leur décrochement total par des méthodes annexes, par exemple en vidangeant la cuve et en balayant les gâteaux par un jet de liquide, ou en imprimant des secousses aux surfaces filtrantes ou en effectuant la circulation à contre-courant sous pression élevée, ces méthodes "violentes" peuvent altérer le pouvoir de séparation du média filtrant en lui infligeant des contraintes et en détruisant la couche limite et nécessitent des temps d'arrêt relativement longs.

Lors de la remise en mode filtration, même si l'on adopte des méthodes "douces" pour l'élimination du gâteau, la résistance initiale de passage est alors très faible et la vitesse du liquide traversant le média filtrant est par conséquent élevée, dont résulte un entraînement indésirable de fines particules solides à travers le média filtrant. Les premiers filtrats doivent être recyclés, ce qui est à comptabiliser dans les temps d'arrêt de l'installation.

Il résulte de tout ce qui précède que le temps réel durant lequel l'installation fonctionne effectivement en mode de filtration est nettement inférieur au temps total de fonctionnement.

Il convient également de remarquer que si les installations de filtration sont particulièrement compactes, c'est grâce au fait que l'on peut juxtaposer dans une même cuve de filtration de très nombreuses surfaces de média filtrant. Mais cette compacité ne va pas sans inconvénients. En effet, les espaces séparant les surfaces filtrantes sont très étroits et dans certaines circonstances imprévues ou accidentelles, il peut se produire entre elles des accumulations de matières solides finissant par former des ponts qui s'arc-boutent entre les surfaces filtrantes. D'une part ceci risque d'endommager ces dernières, et d'autre part il est pratiquement impossible d'éliminer le gâteau de matière solide formant ces ponts et, tôt ou tard, il faut alors stopper l'installation pour les éliminer manuellement.

Une circonstance "imprévue" qu'on mentionnera ici particulièrement est que l'on peut avoir à filtrer des liquides contenant une proportion de matière solide susceptible de varier de manière imprévisible et de provoquer accidentellement de tels ponts.

Dans le but de pallier ces inconvénients, la présente invention propose un filtre du type mentionné ci-avant et comprenant les caractéristiques de la revendication 1.

L'invention propose également une installation de filtration incorporant un tel filtre, caractérisée en ce qu'elle comprend un réservoir d'alimentation pour le liquide à filtrer, une pompe d'alimentation raccordée à l'aspiration audit réservoir et au refoulement à l'orifice d'entrée du filtre, un réservoir tampon pour les filtrats, raccordé audit orifice de sortie et situé à un niveau supérieur à celui des éléments filtrants, un bac de réception de boues relié audit orifice d'évacuation via une vanne d'évacuation, et une tuyauterie de décompression reliant le réservoir d'alimentation, et un orifice de décompression du filtre, dont l'ouie est située au-dessus des éléments filtrants, une vanne de décompression étant montée dans ladite tuyauterie de décompression.

Selon une autre caractéristique de l'invention, dans une installation de filtration de ce type, la cuve de filtre comprend une calotte supérieure dont la hauteur est choisie de manière à piéger un volume donné d'air au sommet de la cuve.

De plus, un conduit de nivellement est prévu entre la cuve et le réservoir d'alimentation, commandé par une vanne de nivellement, et dont l'ouie est située à un niveau intermédiaire entre l'ouie de l'orifice d'entrée et l'ouie de l'orifice de décompression.

Les détails et avantages de l'invention apparaîtront clairement à la lecture de la description qui suit en se référant aux dessins annexés, dans lesquels :

- la figure 1 est une vue en perspective, avec arrachements partiels, d'un élément filtrant d'un filtre conforme à l'invention ;
- la figure 2 est une vue en perspective d'une armature incorporée dans l'élément filtrant de la figure 1 et illustrant son mode de montage sur un collecteur ;
- les figures 3 et 4 sont des vues en coupe verticale et horizontale d'un filtre selon l'invention ;
- les figures 5 et 6 sont des vues en coupe verticale et horizontale d'une variante de filtre analogue à celui des figures 3 et 4 ;
- la figure 7 est une représentation schématique d'une installation de filtration incorporant un filtre selon l'invention ; et
- les figures 8 à 10 sont des représentations schématiques illustrant des variantes d'installations de filtration.

Dans la description qui va suivre, on considèrera tout d'abord la structure du filtre proprement dit, puis la structure d'une installation de filtration incorporant un tel filtre.

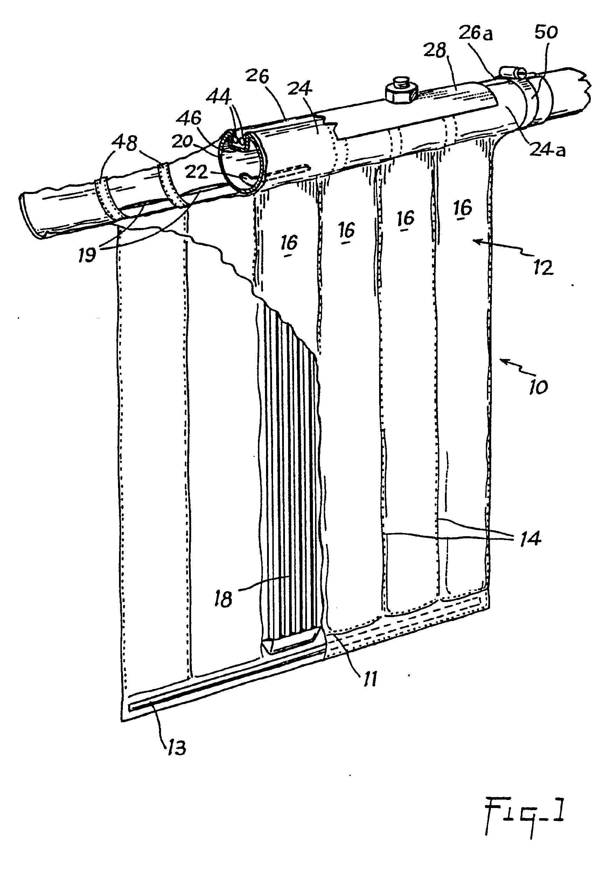

Le filtre se compose d'un certain nombre d'éléments filtrants identiques, ou tout du moins réalisés suivant le même principe, comme illustré à la figure 1.

Chaque élément filtrant 10 comprend une toile filtrante 12 repliée ou fermée en 11 et divisée par des coutures 14 perpendiculaires au pli ou à la fermeture 11 en plusieurs poches 16 juxtaposées. Dans chaque poche est enfilée une armature 18 faisant également office de drain pour le liquide filtré, ou filtrat, qui traverse la toile depuis l'extérieur vers l'intérieur des poches.

En se référant à l'orientation verticale des éléments filtrants tels qu'ils sont installés dans le filtre, on note que les poches sont fermées à leur extrémité basse, et ouvertes à leur extrémité haute 19 où elles communiquent avec un collecteur 20.

A cette fin, le tube collecteur comporte des ouvertures 22 régulièrement réparties le long d'une génératrice inférieure, et les bordures supérieures 24, 26 de la toile 12 non affectées par les coutures verticales sont plaquées contre les parois du tube à l'aide d'une plaque de maintien 28 en forme de gouttière inversée, ce qui empêche toute communication directe entre le volume extérieur et la toile filtrante et le passage intérieur du collecteur.

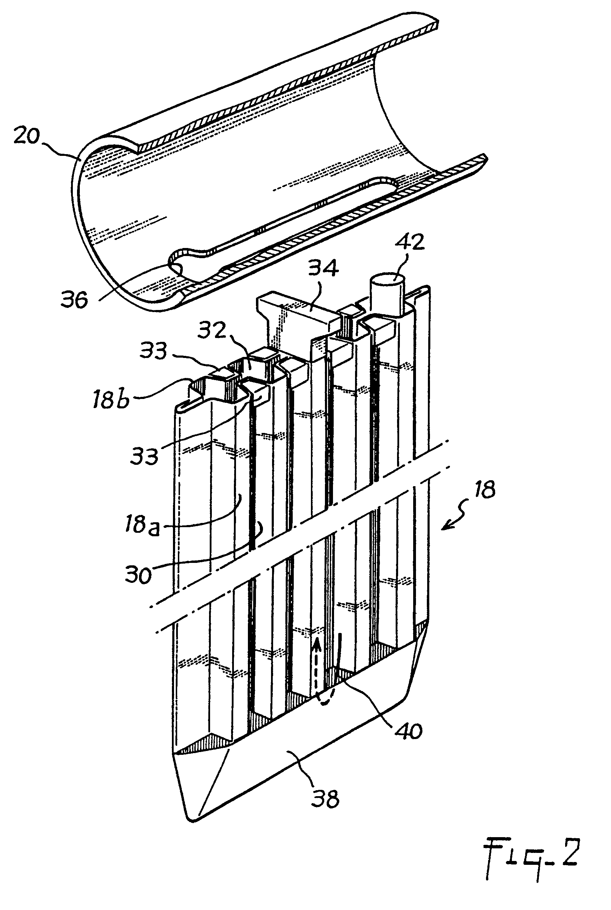

Comme illustré à la figure 2, les armatures 18 enfilées dans les poches sont réalisées au moyen de plaques métalliques ou en matière plastique ondulées 18a, 18b assemblées ou liées dos à dos selon toute technique appropriée de manière à définir entre les ondulations des canaux de drainage externes 30 et des canaux de drainage internes 32. Les diverses dimensions des armatures : épaisseur, largeur, longueur, sont telles qu'elles peuvent être enfilées sensiblement librement dans les poches sans provoquer de tension notable dans la toile 12.

A leur partie supérieure, les armatures sont pourvues de taquets 34 de suspension, qui coopèrent avec des lumières à étranglement 36 le long de la génératrice inférieure du collecteur 20, afin d'assurer la suspension des armatures directement par le collecteur et non par la toile pour éviter de provoquer un allongement de cette dernière sous le poids des armatures. Le collecteur constitue ainsi un support pour les armatures, ainsi que pour les toiles filtrantes.

Cette suspension à taquets, ou tout autre mode de suspension analogue que l'on pourra lui substituer, permet un libre balancement de l'élément filtrant ainsi suspendu sous le collecteur, dont les avantages seront évoqués ultérieurement.

Avantageusement, on a prévu que les lumières 36 recevant les taquets 34 et les ouvertures 22 de communication soient identiques afin de simplifier la réalisation du collecteur 20.

Afin d'améliorer la rigidité de l'ensemble des armatures, on place horizontalement un raidisseur 13 à l'extrémité basse de la toile, maintenu à l'intérieur par une couture sur toute sa périphérie.

A leur extrémité inférieure, les armatures comportent une coiffe protectrice 38 sensiblement sous la forme d'une plaque en V, dans le double but de constituer une portée d'appui continue et dépourvue d'aspérité pour le pli inférieur de la toile, et d'assurer, par l'intérieur, une communication entre les canaux de drainage externes 30 de l'armature et ses canaux de drainage internes 32, comme symbolisé par la flèche 40.

On remarquera quelques autres détails de réalisation, comme par exemple la fixation des taquets 34 de suspension par sertissage et/ou soudure à l'intérieur de l'un des canaux de drainage internes, de préférence celui qui est situé dans l'axe médian de l'armature, ou entre deux canaux pour ne pas boucher le canal interne 32 ; la présence d'un ergot 42 anti-pivotement, à l'extrémité supérieure de l'armature, décalé du taquet de suspension et engagé dans une ouverture du collecteur pour empêcher tout pivotement de l'armature autour de son axe médian.

Avantageusement, des opercules 33 ferment les extrémités supérieures des canaux externes 30 pour imposer une circulation du liquide du haut vers le bas dans ces canaux pour des raisons qui seront exposées plus loin.

Comme illustré à la figure 1, on prévoira de préférence des tresses 44 le long des marques supérieures de la toile qui sont reçues sous serrage dans une gorge 46 le long de la génératrice supérieure du collecteur.

A l'extrémité gauche de la figure, où l'on a omis de représenter le collecteur, on remarque la présence de bandelettes de renfort 48, cousues sur les bordures 24, 26 de la toile au niveau des coutures 14 verticales, afin d'assurer un renfort de la toile précisément à l'extrémité supérieure de ces coutures.

A l'extrémité droite de la figure, on remarque que les bordures 24, 26 supérieures de la toile se prolongent latéralement et que ces prolongements 24a, 26a sont plaqués de manière étanche contre le collecteur au moyen de colliers 50, ou encore au moyen de ligatures équivalentes.

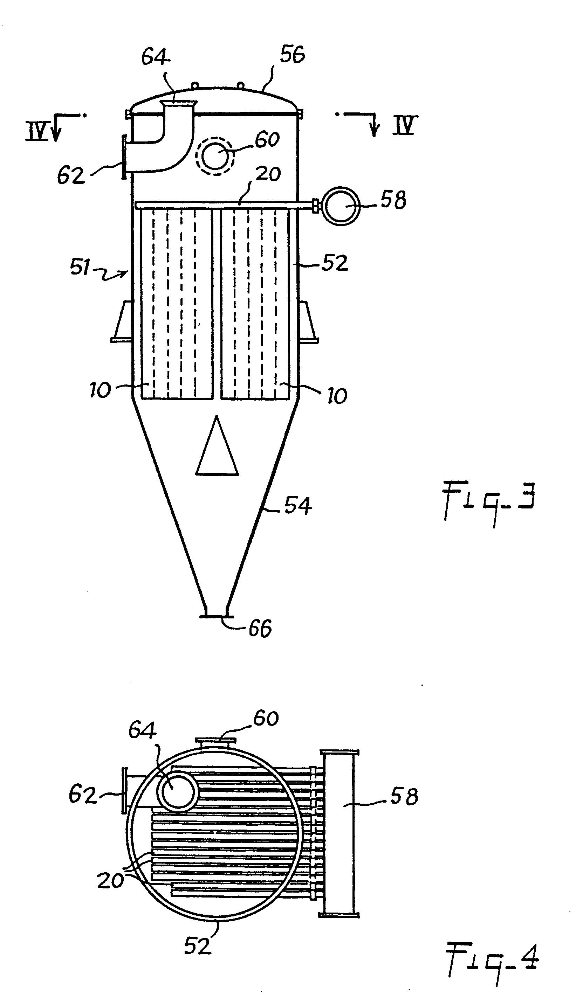

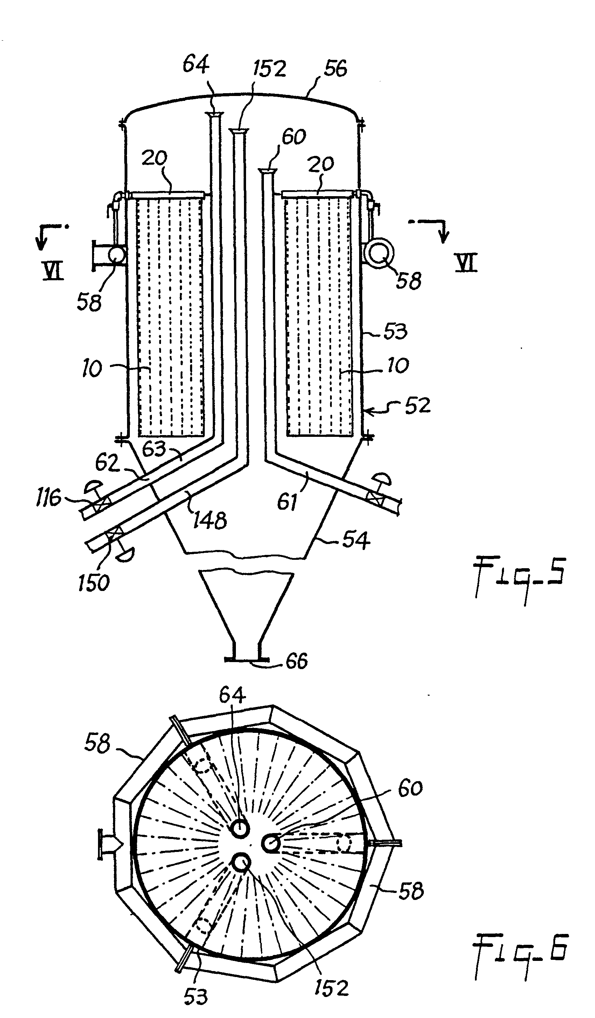

Pour réaliser un filtre complet 51, on dispose côte à côte, soit parallèlement (figures 3 et 4), soit en étoile (figures 5 et 6), plusieurs éléments filtrants 10, du type qui vient d'être décrit, à l'intérieur d'une cuve 52 de filtre de forme générale cylindrique, pourvue d'un fond cônique 54 et d'une calotte supérieure hémisphérique 56. Les collecteurs 20 des éléments filtrants sont raccordés sur un manifold de sortie 58, situé à l'extrémité de la cuve, chaque collecteur traversant la paroi de celle-ci de manière étanche.

De manière facultative, on peut prévoir (fig. 5 et 6) que la cuve 52 comporte un tronçon démontable 53, entre le fond conique 54 et la calotte supérieure 56, sur lequel sont fixés les éléments filtrants 10, ensemble avec leurs collecteurs 20 et le manifold de sortie 58. De la sorte, on peut facilement démonter tout l'ensemble des éléments filtrants sans démonter l'ensemble de la cuve, excepté la calotte supérieure. Cet agencement permet de remplacer rapidement tout l'ensemble des éléments filtrants par un ensemble de secours si nécessaire.

Selon une variante non représentée, la cuve cylindrique est disposée horizontalement et les éléments filtrants y sont introduits au travers d'une fenêtre latérale refermée par une plaque de fermeture. Les éléments filtrants en place sont disposés verticalement comme dans le cas précédent. Cette variante sera recommandée lorsque la place disponible est limitée dans le sens vertical.

Les collecteurs sont fixés, de préférence de manière démontable, à l'intérieur de la cuve et sensiblement au même niveau de manière à laisser une hauteur de garde prédéterminée sous le sommet de la cuve, pour des raisons qui seront expliquées plus loin.

La cuve comporte également un orifice d'entrée 60, débouchant au-dessus du niveau des collecteurs et raccordé au refoulement d'une pompe d'alimentation de liquide à filtrer ; un orifice de décompression 62 dont l'ouïe 64 est située en partie haute de la cuve et qui débouche à l'extérieur vers le bac d'aspiration de la pompe d'alimentation ; et un orifice d'évacuation 66 pour les boues à l'extrémité du fond cônique 54 de la cuve 52.

En variante, lorsque l'ensemble des éléments filtrants est monté sur un tronçon de cuve démontable 53 (Figures 5 et 6), les orifices d'entrée 60 et de décompression 62 sont situés en partie basse de la cuve et reliés à leurs ouies respectives par des conduits 61, 63 traversant la cuve verticalement en son centre. Ceci évite de débrancher les tuyauteries lors du démontage de la calotte supérieure.

Dans sa version la plus simple, l'installation de filtration incorporant le filtre décrit ci-avant et illustrée à la figure 7, se compose d'un filtre 51, d'une pompe d'alimentation 102, puisant le liquide à filtrer dans un réservoir 104, situé au-dessous du niveau du filtre 51, et le refoulant dans la cuve 52 du filtre via l'orifice d'entrée 60, d'un bac tampon 106 relié au manifold 58 de sortie et placé à un niveau supérieur à celui des collecteurs 20, d'où les filtrats s'échappent par une canne de trop-plein 108, d'un bac de réception de boues 110, en liaison avec l'orifice d'évacuation via une vanne d'évacuation 112 commandée, d'une conduite 114 de décompression reliant l'orifice de décompression 62 au réservoir 104 et équipée d'une vanne de décompression 116 commandée, et enfin d'une tuyauterie d'équilibrage 118 branchée en dérivation sur le conduit 120 de refoulement de la pompe et s'élevant à une hauteur au moins égale à la pression de refoulement de la pompe, exprimée en colonne de liquide.

Le fonctionnement de cette installation est commandé par une armoire de commande 122 agissant essentiellement sur les vannes d'évacuation 112 et de décompression 116, dans la mesure où, comme on le verra ci-après, la pompe d'alimentation 102 peut fonctionner en permanence durant toute la séquence de fonctionnement.

Prenant comme situation de départ l'installation fonctionnant en mode de filtration établie (figure 7) les deux vannes d'évacuation 112 et de décompression 116 sont fermées, la cuve 52 est pleine de liquide à filtrer, excepté un faible reliquat d'air 124 piégé au sommet de la calotte supérieure de la cuve, le tube d'équilibrage 118 est rempli de liquide jusqu'à une hauteur sensiblement stable correspondant à la pression de refoulement de la pompe 102, le liquide traverse les toiles filtrantes 12 sur lesquelles s'accumulent les particules solides en suspension, en formant progressivement un "gâteau", le liquide clarifié ayant ainsi pénétré à l'intérieur des poches s'écoule alors le long des canaux de drainage externes des armatures, partiellement vers le haut jusqu'à la partie supérieure des poches, et partiellement vers le bas jusqu'à la coiffe inférieure de l'armature d'où il remonte vers le haut en empruntant les canaux de drainage internes et rejoint la fraction de liquide qui s'est écoulée directement vers le haut, la totalité du débit de filtrat s'écoule alors au travers des ouvertures vers les collecteurs 20 puis le manifold 58, pour aboutir dans le réservoir tampon 106. La canne de trop-plein 108 maintient le niveau de filtrat dans le réservoir tampon 106 à une hauteur constante et le filtrat qui s'échappe par la canne de trop-plein s'écoule par une canalisation 126 vers un réservoir 128 d'où il est puisé par une pompe 130 vers une installation d'utilisation non représentée.

Lorsque la phase de filtration est terminée, ce qui est déterminé de différentes manières, par exemple à l'aide d'un dispositif temporisateur intégré à l'armoire de commande ou lors du dépassement d'un seuil de pression prédéterminé au refoulement de la pompe, correspondant à la formation d'un gâteau d'épaisseur donnée sur les toiles filtrantes, ou encore plus généralement par un dispositif automatique permettant d'optimiser la marche à partir des lois de la filtration et de la quantité de suspension à traiter et constitué par un automate auquel on peut adjoindre un ou plusieurs microprocesseurs, l'armoire de commande détermine en un premier temps l'ouverture de la vanne de décompression 116, ce qui a pour effet de faire chuter la pression dans la cuve 52, étant fait observer que cette chute de pression se produit plus ou moins progressivement, plus précisément pendant toute la durée nécessaire à la vidange de la tuyauterie d'équilibrage 118. Bien entendu, cette durée dépend du volume de liquide contenu dans la tuyauterie d'équilibrage 118, donc du diamètre de celle-ci, ainsi que du diamètre du conduit de décompression 114 et de sa vanne 116, lesquels doivent permettre le retour au réservoir 104 et en écoulement par gravité, d'un débit au moins égal au débit de la pompe 102 refoulant sans contre-pression augmenté du débit de liquide s'écoulant de la tuyauterie d'équilibrage 118. On remarque que la pompe d'alimentation 102 continue de fonctionner pendant cette durée.

Dans la mesure où la pression dans la cuve chute à une valeur voisine de zéro, la filtration cesse par conséquent.

En un second temps l'armoire de commande 122 déclenche l'ouverture de la vanne d'évacuation 112, par laquelle s'échappe alors le liquide contenu au fond 54 de la cuve et les boues qu'il contient, ces boues étant constituées par les débris de gâteau détachés des toiles filtrantes 12 au cours du cycle précédent. En effet, à ce stade du cycle de fonctionnement en cours de description, la chute de pression à l'intérieur de la cuve 52, et la présence de filtrat dans la cuve tampon 106 à un niveau supérieur aux éléments filtrants 10 entraînant l'apparition d'une contre-pression de l'intérieur vers l'extérieur des poches 16 et un écoulement de filtrat dans le même sens. Il s'ensuit un décollement du gâteau de matières solides accumulé sur les toiles filtrantes et dont les débris sont entraînés par la pesanteur en direction du fond 54 de cuve où ils vont se rassembler avant d'être évacués au cycle suivant.

La section de la vanne d'évacuation 112 est choisie de telle sorte que la quantité de boues et de liquide qu'elle contient puisse être évacuée en un temps aussi court que possible pour ne pas prolonger le temps d'arrêt, cette quantité étant déterminée par la concentration à obtenir à la sortie. Cette quantité ou volume de boues et de liquide évacués fait baisser le niveau dans la cuve 52 et compense en tout ou partie, selon les cas, la quantité de filtrat revenue à contre-courant, augmentée de la quantité de liquide déversé par la pompe 102 pendant la durée correspondante.

Plusieurs points remarquables sont à noter :

- Pendant la phase qui précède, le maintien en fonctionnement de la pompe 102, qui est permis en raison de la brièveté de la phase d'évacuation, permet de maintenir constamment le niveau de liquide au-dessus des éléments filtrants 10. En effet, si ce niveau venait à baisser de manière telle que les éléments filtrants émergent partiellement du liquide, le décollement du gâteau s'effectuerait alors préférentiellement le long des parties émergées au détriment des parties immergées. De plus, les remous provoqués par l'arrivée de liquide à travers l'orifice d'entrée n'affectent que la tranche supérieure de liquide située au-dessus des éléments filtrants et on évite ainsi la désagrégation des fragments de gâteau. Enfin, puisque la pompe n'a pas été arrêtée, il n'y a pas lieu de la remettre en route ultérieurement et l'on évite les inconvénients d'une telle remise en route, inconvénients mécaniques (efforts de démarrage), hydrauliques (fluctuations transitoires de pression, coups de bélier, cavitation) ou électriques (surintensités de démarrage), sans compter l'économie d'un étage de commande spécifique dans l'armoire de commande 122, ou encore l'économie de consommation électrique.

- A supposer que, lors de la phase de filtration, se soient produites des accumulations par augmentation anormale de l'épaisseur du gâteau le long d'éléments filtrants contigüs, le montage de ces derniers à balancement libre empêche que les masses solides ainsi constituées ne se stabilisent par arc-boutement entre les éléments filtrants. Dans les filtres classiques où les toiles filtrantes sont tendues sur des supports fixes, de telles accumulations entraînent inévitablement l'arrêt de l'installation et une intervention manuelle. En effet, il se développe des efforts très importants au niveau de ces accumulations qui risquent d'endommager le média filtrant et les plateaux qui le supportent.

- Lorsque le niveau de liquide dans le bac tampon 106 a suffisamment baissé, la contre-pression de filtrat devient pratiquement nulle et l'écoulement de filtrat cesse progressivement, ce qui évite de perturber la mince couche limite de gâteau adhérant à la toile filtrante 12. En effet, cette couche limite est composée d'une imbrication de particules solides de différentes grosseurs, et sa présence contribue aux performances du filtre. Sa déstabilisation provoquerait la réouverture de passages à travers la toile filtrante, par lesquels de fines particules solides pourraient se faufiler à la reprise de la filtration.

- Pendant toute la phase de filtration, la pression différentielle entre l'extérieur et l'intérieur des poches de toile filtrante a pour effet de plaquer les toiles, et donc le gâteau de particules solides, contre les armatures qui supportent ainsi directement et totalement le poids du gâteau. Ainsi, les toiles filtrantes ne supportent pas le poids du gâteau et ne risquent pas de s'allonger de ce fait.

- Lors du passage de la phase de filtration à la phase de décharge du gâteau par contre-courant de filtrat, les poches ont tendance à présenter un certain gonflement. Le volume total représenté par le gonflement de toutes les poches de toile filtrante constituant le filtre est un volume "mort" en ce sens que le volume de filtrat correspondant, en retour du bac tampon, ne participe pas à la circulation à contre-courant. Ici cependant, le profil de l'armature en section transversale est très proche du profil en fuseau que les poches adoptent lors de l'apparition du contre-courant de filtrat, de sorte que ce volume mort est très faible. De plus, la toile ne subit que de faibles déformations ; il en est de même pour le gâteau contigü,u, qui n'a donc pas tendance à se fissurer. L'apparition de telles fissures serait désavantageuse dans la mesure où elles constitueraient des voies d'écoulement préférentielles pour le filtrat s'écoulant à contre-courant.

- Pendant toute la phase d'écoulement à contre-courant, il s'établit donc une pellicule de liquide émergeant à travers les toiles d'une grande uniformité et d'une grande régularité, ce qui favorise un décollement de la totalité du gâteau accumulé et empêche à des fragments de gâteau de s'accrocher çà et là à des toiles adjacentes au cours de leur chute entre des éléments filtrants adjacents jusqu'au fond de la cuve. On rappellera utilement à cet égard que les éléments filtrants considérés dans la présente description ont une hauteur qui peut dépasser 2 mètres, pour un espacement de quelques centimètres.

A l'issue de cette phase, ce qui est déterminé soit au moyen d'un dispositif temporisateur de l'armoire de commande 122, soit par la détection de l'arrivée du niveau dans le bac de réception des boues 110 à un seuil prédéterminé, l'armoire de commande 122 déclenche la fermeture de la vanne d'évacuation 112, puis celle de la vanne de décompression 116, après une temporisation suffisante pour que le niveau de liquide dans la cuve ait atteint un niveau voisin de l'ouie 64 du tube de décompression en chassant l'air enfermé en partie haute de la cuve 52. En même temps cette temporisation laisse aux gâteaux déchargés le temps de descendre dans le fond de la cuve pour ne pas être réappliqués sur les toiles lors de la reprise de la filtration.

La pression du liquide dans la cuve augmente alors progressivement, jusqu'à la pression nominale de refoulement de la pompe 102, cette augmentation s'étalant sur toute la durée nécessaire à la remontée du niveau de liquide dans la tuyauterie d'équilibrage 118. Ceci se traduit, au niveau des éléments filtrants 10, par un rétablissement progressif de l'écoulement du liquide depuis l'extérieur vers l'intérieur des poches, en évitant des vitesses de filtration élevées susceptibles d'entraîner à travers les filtres les particules solides les plus fines. La qualité de la filtration est donc pratiquement absolue dès la reprise de la filtration et il n'est pas besoin de recycler les premiers filtrats comme c'est le cas dans les installations traditionnelles.

Pour ce qui concerne les éléments filtrants eux-mêmes, la circulation des filtrats du haut vers le bas dans les canaux de drainage externes avec remontée par les canaux internes assure un balayage permanent du volume situé à l'extrémité inférieure des poches, ce qui empêche toute accumulation de particules solides à cette extrémité. En effet, dans la mesure où la filtration n'est jamais absolue il y a toujours passage de quelques particules solides qui risqueraient de s'accumuler à la longue à cette extrémité inférieure si la circulation de filtrat s'effectuait uniquement de bas en haut, la vitesse d'écoulement étant par définition pratiquement nulle à l'extrémité inférieure.

A partir de ce qui précède, on notera que l'invention permet des avantages supplémentaires.

Dans les installations traditionnelles, la reprise brusque de la filtration produit des premiers filtrats troubles qu'il convient de recycler. On a alors intérêt à augmenter la durée des phases de filtration, au prix de la formation de gâteaux de forte épaisseur, ce qui impose d'écarter suffisamment les éléments filtrants, donc de diminuer la surface filtrante utile dans un volume donné, et de prévoir des pompes à forte pression de refoulement pour tenir compte de l'augmentation de perte de charge à travers le gâteau.

Au contraire, grâce à la présente invention, la brièveté des périodes d'interruption, la grande régularité de répartition du contre-courant dans les éléments permettant un décollement uniforme des gâteaux les plus minces et la non-obligation de recycler les premiers filtrats permettent d'envisager des phases de filtration beaucoup plus courtes. Les gâteaux atteignent alors des épaisseurs plus faibles et l'on peut rapprocher les éléments filtrants et augmenter la surface filtrante utile dans un volume donné. De plus, la perte de charge moins élevée à travers le gâteau permet de prévoir des pompes à plus faible pression de refoulement.

S'il est malgré tout nécessaire de recycler les filtrats à la reprise de la filtration, ce recyclage ne concernera qu'un volume très limité. A cet effet, l'installation pourra être complétée, comme indiqué, par une conduite de recyclage 132 reliant le manifold de sortie 58 et le réservoir d'alimentation 104, et équipée d'une vanne de recyclage 134 commandée dont l'ouverture est déclenchée au moment de la reprise de la filtration, plus précisément lors de la fermeture de la vanne d'évacuation 112, et la fermeture de cette vanne de recyclage étant déclenchée après une certaine temporisation, par exemple la durée nécessaire au rétablissement de la pression de filtration dans la cuve ou d'une fraction de cette pression.

Ces avantages se mesurent non seulement en économies d'investissement mais également en économies d'énergie en fonctionnement.

Au cours de la phase de filtration, il peut se produire que des bulles d'air ou de gaz contenus dans la suspension refoulée par la pompe d'alimentation 102 s'accumulent au sommet de la cuve et que la quantité de ces bulles d'air ou de gaz soit telle qu'elles finissent par passer à travers les toiles, ce qui affecte le rendement de filtration et favorise le colmatage des toiles filtrantes.

Pour éviter cet inconvénient, comme représenté en pointillé à la figure 7, on peut prévoir que l'installation de filtration comporte une tuyauterie de dégazage 119, reliée au sommet de la tuyauterie d'équilibrage, par laquelle s'échappent en continu l'air ou le gaz amenés avec la suspension refoulée par la pompe d'alimentation et qui risqueraient de faire descendre le niveau de liquide et passer ensuite par les éléments filtrants. On profite ainsi de la tuyauterie d'équilibrage pour recueillir les liquides qui sont entraînés par les échappements d'air ou de gaz à travers la tuyauterie de dégazage 119.

L'invention permet d'ailleurs de manière très simple de surveiller le degré de colmatage des toiles filtrantes pour déterminer à quel moment il convient de les remplacer ou de les régénérer (régénération acide pour les toiles utilisées en filtration de sirops carbonatés par exemple).

A cet effet, on place deux sondes de niveau dans le bac tampon 106 et on mesure pendant les phases d'arrêt de la filtration où le filtrat s'écoule en retour vers les poches filtrantes afin de décoller le gâteau de particules solides, le temps nécessaire pour que le niveau de filtrat passe de la sonde supérieure à la sonde inférieure. Naturellement, pour que ce temps soit réellement représentatif du degré de colmatage, les deux sondes sont placées en partie basse du bac tampon, puisque la chute de niveau dans la partie haute est essentiellement représentative du volume de filtrat nécessaire pour le gonflement des poches, déjà qualifié ci-avant de volume mort.

A chaque cycle, on suit l'évolution de ce temps, soit par comparaison à un seuil de durée prédéterminée, soit par comparaison au temps observé avec des toiles filtrantes neuves.

Selon la variante représentée à la figure 8, l'installation de filtration est dépourvue de tuyauterie d'équilibrage, mais la calotte 56 supérieure de la cuve présente une hauteur plus importante et le fond du bac tampon 106 est situé approximativement au niveau des collecteurs 20 des éléments filtrants 10.

La progressivité de la montée en pression à la reprise de la filtration après fermeture des vannes d'évacuation 112 et de décompression 116 est assurée par la compression progressive du volume d'air piégé au sommet de la cuve. On pourra prévoir pour la vanne de décompression une vanne du type à fermeture et ouverture progressives. La progressivité de la chute de pression au début de la phase de décharge est assurée par l'ouverture progressive de la vanne de décompression. On pourra aussi prévoir une vanne de décompression du type à fermeture progressive et à ouverture rapide pour décomprimer le filtre en un temps aussi court que possible pour réduire le temps d'arrêt.

Dans le but de maintenir une quantité d'air constante au sommet de la cuve, on prévoit un conduit de nivellement 148, commandé par une vanne 150, dont l'ouïe 152 est située à un niveau intermédiaire entre l'ouïe du conduit d'alimentation et l'ouïe du conduit de décompression, et qui débouche dans le réservoir d'alimentation.

On déclenche l'ouverture de cette vanne pendant la phase d'arrêt de filtration, ce qui a pour effet de garder constant le volume d'air entre le sommet de la cuve et l'ouïe du conduit de nivellement avant la reprise du cycle de filtration suivant. Naturellement, on déclenche la fermeture de cette vanne avant la reprise de la filtration, par exemple en même temps que la fermeture de la vanne de décompression.

La disposition du manifold 58 à l'extérieur de la cuve impose certes de prévoir autant de traversées de la paroi de la cuve qu'il y a de collecteurs 20, mais elle permet d'implanter sur chaque raccordement entre collecteur et manifold un tronçon de contrôle en matériau transparent et une vanne d'isolement.

Ainsi, si l'on constate une apparition anormale de particules solides dans les filtrats, il est possible de détecter rapidement lequel des éléments filtrants est incriminé en inspectant visuellement la limpidité des filtrats dans les tronçons de contrôle, puis d'isoler le (ou les) élément(s) filtrant(s) défaillant(s) à l'aide de la vanne d'isolement correspondante, ce qui évite de recycler une quantité importante de filtrat et permet de poursuivre le fonctionnement pratiquement sans perturbation ni perte de capacité globale, jusqu'à la prochaine intervention de maintenance programmée.

Une disposition différente (non représentée) du manifold 58 à l'extérieur de la cuve pourra consister à le placer non pas en-dessous des collecteurs des éléments filtrants 10, comme représenté en figure 5, mais au-dessus de ces derniers ; ainsi le manifold 58 sera "en charge" sur lesdits éléments filtrants et en lui donnant une capacité suffisante, il pourra avantageusement remplacer en tout ou partie le réservoir tampon 106.

On peut prévoir en variante une disposition différente, s'appliquant de préférence aux filtres dans lesquels les éléments filtrants sont disposés en étoile, selon laquelle le manifold est disposé au centre de la cuve (non représentée).

Dans ce cas, le conduit reliant le manifold au bac tampon traverse une seule fois la paroi de la cuve, ce qui limite les problèmes d'étanchéité.

Si l'on désire conserver la faculté de contrôler la limpidité des filtrats pour chacun des éléments filtrants, on pourra prolonger chaque collecteur vers l'extérieur par un tube de faible diamètre traversant la paroi de la cuve et se terminant par une vanne de prise d'échantillon. En cas d'apparition de particules solides dans les filtrats, on pourra ainsi prélever des échantillons de filtrats pour chacun des éléments filtrants et détecter le (ou les) élément (s) défaillant (s).

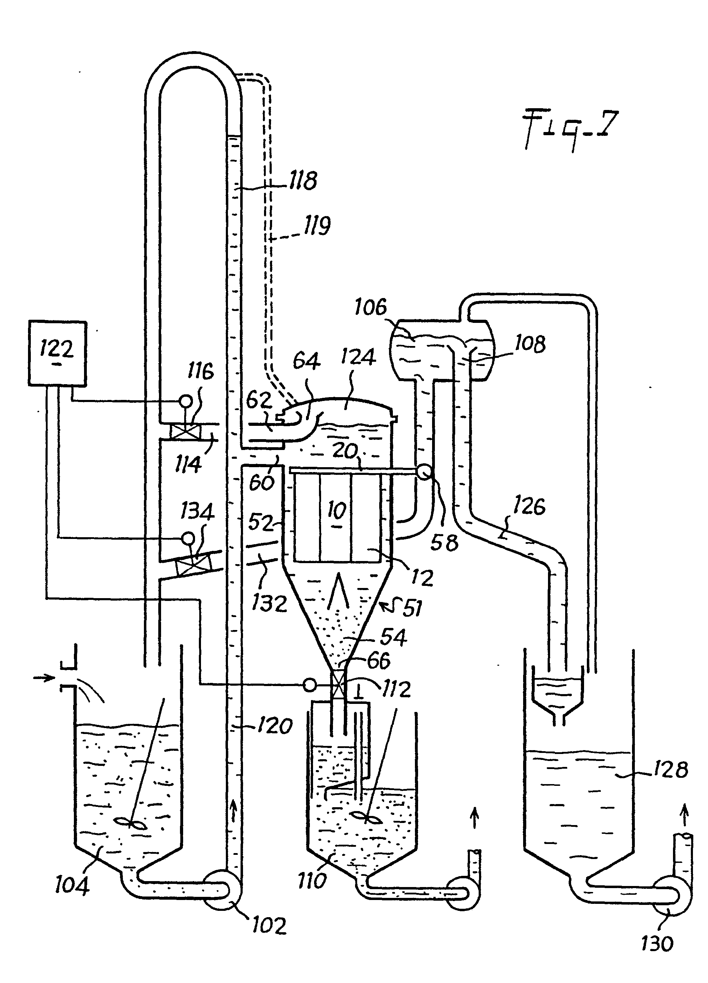

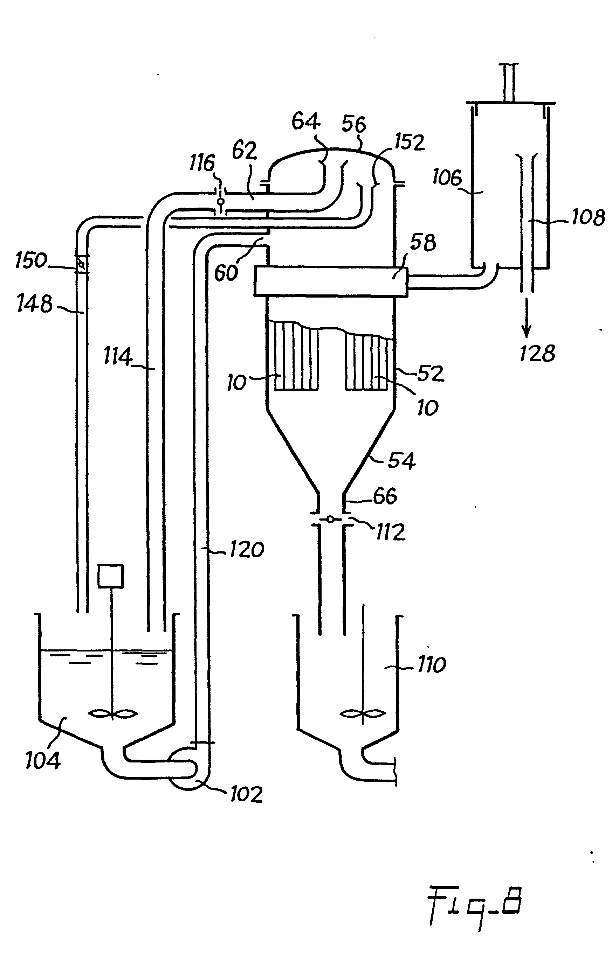

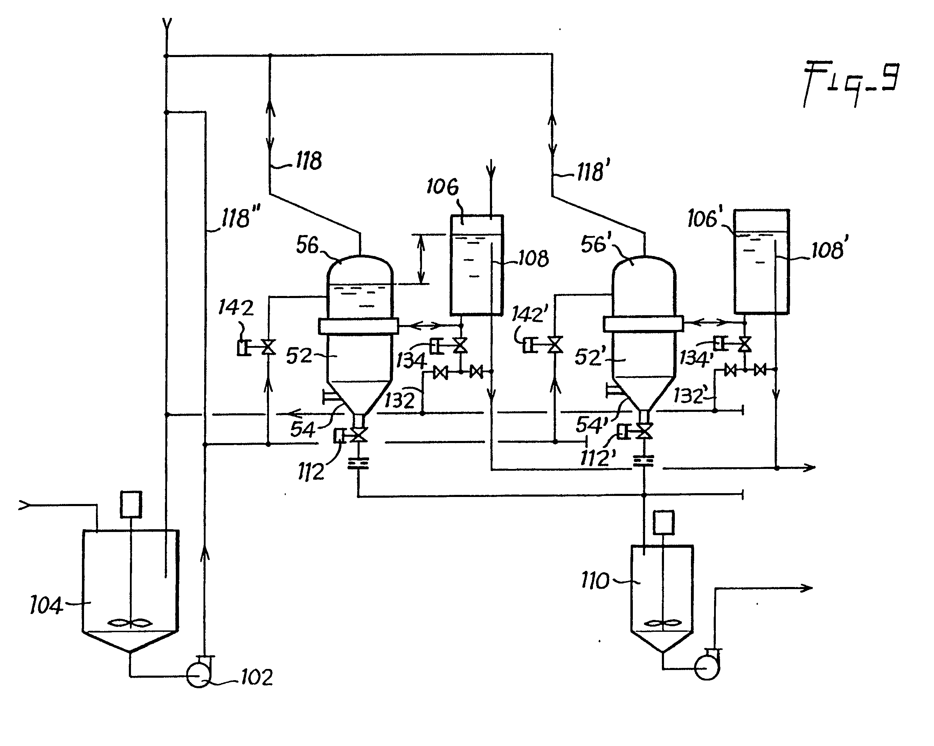

La variante de la figure 9 est une installation comportant deux filtres à fonctionnement alternatif, agencés en parallèle. Chaque filtre 52, 52' est accompagné d'un bac tampon 106, 106', d'une tuyauterie d'équilibrage et de dégazage 118, 118', d'une vanne d'évacuation 112, 112'. Par contre, ils sont dépourvus de vannes de décompression.

Les deux trop-pleins 108, 108' des bacs tampons sont raccordés à un conduit d'utilisation commun 140, les deux vannes d'évacuation débouchent dans un réservoir de réception de boues unique 110, et un seul ensemble réservoir 104-pompe 102 alimente les deux cuves de filtres via deux vannes d'alimentation 142, 142' commandées en séquence par l'armoire de commande.

Brièvement, cette séquence consiste à fermer la vanne d'alimentation 142 de la première cuve 52 lorsqu'on atteint la fin de la phase de filtration pour cette première cuve, et à ouvrir, avec le plus faible retard possible, la vanne d'alimentation 142' de la seconde cuve 52'.

Après fermeture de la vanne d'alimentation 142 de la première cuve, la tuyauterie d'équilibrage 118 correspondante se vide progressivement à travers le filtre jusqu'à l'arrêt total de la filtration lorsque le niveau y est descendu jusqu'au voisinage du niveau dans le bac tampon 106. L'ouverture de la vanne d'évacuation 112 est alors déclenchée pour évacuer les boues accumulées en fond de cuve 54 et provoquer le décollement du gâteau par contre-courant de filtrat à travers les éléments filtrants.

La section de la vanne d'évacuation 112 et son temps d'ouverture sont déterminés de telle manière que le niveau de liquide en fin de décharge affleure au niveau des collecteurs des éléments filtrants afin que ceux-ci restent toujours immergés.

La vanne d'évacuation 112 est alors fermée et le premier filtre 52 est donc prêt pour la reprise de la filtration lorsque la phase de filtration du second filtre 52' se termine et que la position des vannes d'alimentation 142, 142' est inversée.

Avantageusement, et de préférence s'il y a lieu de recycler partiellement des filtrats en début de reprise de filtration, on pourra déclencher l'ouverture de la vanne d'alimentation 142 du premier filtre légèrement avant la fermeture de celle (142') du second filtre et ouvrir la vanne de recyclage 134 du premier filtre à ce moment-là. Ceci permettra de décaler la phase de recyclage des filtrats du premier filtre 52 avant la fin de la phase de filtration du second 52' et la reprise effective de la filtration du premier filtre aura lieu sans retard, garantissant la continuité de l'écoulement de filtrat vers l'utilisation.

Dans la mesure où l'installation est dépourvue de tuyauterie de décompression, on évite une accumulation excessive d'air de dégazage sous la calotte supérieure 56, 56' des cuves en raccordant les tuyauteries de dégazage-équilibrage 118, 118' directement au sommet de ces dernières. Les tuyauteries 118, 118' se rejoignent par ailleurs à l'extrémité haute d'une tuyauterie d'équilibrage commune 118".

On remarquera que cette installation comprend exactement le même nombre de vannes commandées que s'il s'agissait de deux installations indépendantes du type décrit ci-avant. Les hommes de métier apprécieront aisément l'économie que cela représente compte tenu du coût très élevé de telles vannes.

Dans les installations où les phases de filtration sont très courtes, on devra quand même prévoir des tuyauteries de décompression avec vannes de décompression pour raccourcir le temps de vidange de la tuyauterie d'équilibrage et éviter que la phase d'arrêt d'un filtre ne dure plus longtemps que la phase de filtration de l'autre.

Le diamètre de ces tuyauteries et vannes de décompression pourra d'ailleurs être relativement faible.

Toutes les installations qui viennent d'être décrites peuvent précéder une autre installation identique chargée de pétrir les boues produites par celle qui la précède après avoir dilué ces boues avec un liquide moins riche en soluté pour effectuer de cette façon un lavage méthodique de ces boues.

Si nécessaire, on pourra prévoir en cascade une installation de troisième filtration, puis quatrième, les filtrats produits par ces installations étant recyclés en aval et servant à diluer les boues contenant un liquide plus riche en soluté que le filtrat recyclé.

Dans tout ce qui précède, on a considéré que le déchargement des gâteaux de particules solides accumulées est effectué dans le même liquide que celui que l'on filtre.

Il ne peut pas toujours en être ainsi et pour diverses raisons, on peut être amené à décharger les gâteaux dans un liquide différent, ou encore "à sec". Le problème qui se pose alors dans ce type de situation est que le gâteau imbibé d'un liquide différent, ou le gâteau égoutté, subit des contractions latérales qui engendrent des fissures, lesquelles forment alors des trajets préférentiels pour le fluide utilisé par la circulation à contre-courant et le gâteau ne se décolle qu'imparfaitement.

Grâce à la structure proposée ici pour les éléments filtrants où les toiles sont enfilées sans être notablement tendues sur les armatures et sont donc capables de "suivre" librement les contractions latérales du gâteau, on n'observe pas de formation de telles fissures et le décollement du gâteau est pratiquement parfait sans nécessiter une quantité importante de liquide à contre-courant.

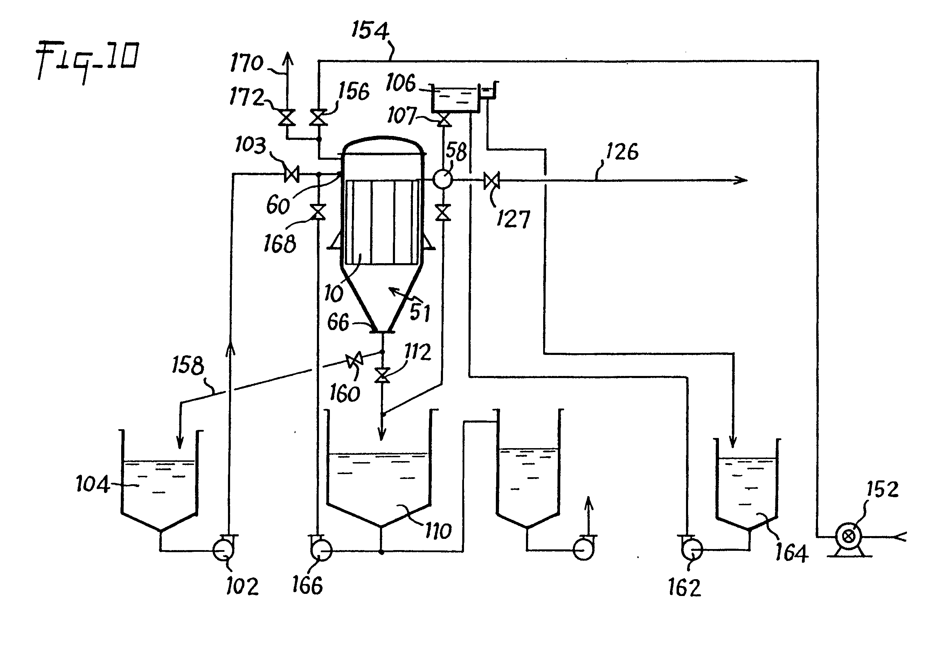

La figure 10 illustre un exemple d'installation grâce à laquelle le déchargement des gâteaux s'effectue dans un liquide différent du liquide à filtrer, cette installation permettant également une chasse des filtrats à l'air.

Comme illustré, l'installation comprend un compresseur d'air 152 refoulant dans une tuyauterie 154 débouchant au voisinage de l'orifice d'alimentation et commandée par une vanne 156. De l'orifice d'évacuation 66 part une conduite de dérivation 158 commandée par une vanne 160, qui aboutit dans le réservoir d'alimentation 104.

Le manifold de sortie 58 peut être mis en communication soit avec une conduite d'utilisation 126 au moyen d'une vanne 127, soit avec un bac tampon 106 contenant un liquide différent du liquide à filtrer au moyen d'une vanne 107.

A titre d'exemple, pour la filtration de sirops carbonatés dans les usines de production sucrière, ce second liquide pourra avantageusement être de l'eau chaude. L'alimentation du bac tampon est assurée par exemple au moyen d'une pompe 162 puisant dans un réservoir 164.

Une pompe de recyclage 166 puise dans le bac d'évacuation 110 pour recycler le liquide chargé de particules dans le filtre via l'orifice d'alimentation et une vanne commandée 168, pour des raisons qui seront exposées plus loin.

Le fonctionnement de cette installation suit la séquence suivante :

1) Phase filtration :

La pompe d'alimentation est en fonctionnement, vanne d'alimentation 103 ouverte, les deux vannes 168 et 156 étant fermées, de même que la vanne d'évacuation 112 et la vanne de dérivation 160. Le liquide traverse les toiles filtrantes et les filtrats s'écoulent directement vers l'utilisation via le manifold 58 et la vanne 127.

2) Phase de chasse de filtrats contenus dans les plateaux et de la suspension contenue dans la cuve :

La pompe d'alimentation 102 est arrêtée et la vanne d'alimentation 103 fermée. Le compresseur d'air 152 est mis en route et la vanne 156 ouverte. La pression d'air comprimé maintient les toiles filtrantes ainsi que les gâteaux de particules correctement plaqués contre les armatures. Le reliquat de liquide restant en partie basse de la cuve est ramené vers le réservoir d'alimentation 104 par la conduite de dérivation 158 en ouvrant la vanne de dérivation 160 qui est ensuite refermée, de même que la vanne d'utilisation 127.

3) Phase d'évacuation des gâteaux :

L'alimentation en air comprimé est maintenue tandis que la pompe de recyclage 166 est mise en route, avec ouverture de la vanne de recyclage 168. Ainsi, l'air comprimé est progressivement remplacé par du liquide. Son alimentation s'arrête lorsque le filtre est plein de la suspension recyclée, de même que la pompe de recyclage 166. Ensuite, le manifold de sortie est mis en communication avec le réservoir tampon 106 contenant le second liquide et le retour de ce dernier à travers les toiles filtrantes provoque le décollement des gâteaux qui se rassemblent dans le liquide recyclé par la pompe de recyclage.

Après une certaine temporisation, la vanne d'évacuation 112 est ouverte pour vidanger le filtre des boues constituées par les gâteaux mélangés à la suspension recyclée.

La reprise de la phase de filtration s'effectue alors par remise en route de la pompe d'alimentation 102 et ouverture de la vanne d'alimentation 103 puis remise en communication du manifold de sortie 58 avec la conduite d'utilisation 126. La cuve étant initialement totalement remplie d'air, on prévoira une conduite d'échappement 170 avec vanne 172 que l'on ferme une fois que le niveau de liquide a atteint le niveau de l'ouïe d'échappement, ce qui définit le matelas d'air assurant la progressivité de la remontée en pression.

## Revendications

1. Filtre (51) pour liquides chargés de particules solides, comprenant une cuve de filtre (52) pourvue d'un orifice d'entrée (60) pour le liquide à filtrer, d'un orifice de sortie (58) pour le filtrat ou liquide filtré et d'un orifice d'évacuation (66) pour les boues de particules solides et une pluralité d'éléments filtrants formés au moyen de toiles (12) de média filtrant interposées entre les orifices d'entrée et de sortie et disposées verticalement dans ladite cuve de filtre autour d'armatures (18) pourvues de canaux de drainage longitudinaux (30, 32) et montées à suspension sous des supports (20) fixés dans ladite cuve (52) caractérisé en ce que lesdites toiles (12) de média filtrant sont conformées en poches allongées (16) enfilées librement sur lesdites armatures (18), lesdites poches présentant des ouvertures (19) orientées vers le haut et en communication avec ledit orifice de sortie (58), et que lesdites armatures (18) sont suspendues sous leurs supports avec possibilité d'un libre balancement de l'élément filtrant ainsi suspendu sous ledit support.

2. Filtre selon la revendication 1, caractérisé en ce que lesdites toiles sont repliées et comportent des coutures parallèles entre lesquelles sont définies lesdites poches.

3. Filtre selon la revendication 2, caractérisé en ce que lesdites armures sont réalisées sous forme de plaques ondulées en métal ou autre matériau, de largeur correspondant à celle desdites poches, et entre les ondulations desquelles sont définis des canaux de drainage.

4. Filtre selon la revendication 3, caractérisé en ce que lesdites armatures sont réalisées au moyen de deux plaques ondulées en métal ou autre matériau assemblées ou liées dos à dos de manière à définir entre leurs ondulations des canaux de drainage esternes et de canaux de drainage internes.

5. Filtre selon la revendication 4, caractérisé en ce que les canaux externes sont fermés à leur extrémité supérieure par des opercules.

6. Filtre selon l'une quelconque des revendications 3 et 5, caractérisé en ce que lesdites armatures comportent des taquets de suspension à leur extrémité supérieure et que lesdits supports comportent des lumières à étranglement, aptes à recevoir lesdits taquets.

7. Filtre selon la revendication 6, caractérisé en ce que lesdits supports sont réalisés sous forme de tubes collecteurs, lesdites lumières constituant des ouvertures de passage entre lesdites poches et le passage intérieur desdits tubes collecteurs.

8. Filtre selon la revendication 7, caractérisé en ce que lesdites toiles comportent des bordures supérieures plaquées contre lesdits tubes collecteurs au moyen de plaques de maintien.

9. Filtre selon l'une quelconque des revendications 3 à 8, caractérisé en ce que lesdites armatures comportent une coiffe protectrice à leur extrémité inférieure.

10. Filtre selon la revendication 9, caractérisé en ce que ladite coiffe protectrice consiste en une plaque en V, assurant par l'intérieur une communication entre les canaux de drainage externes et internes desdites armatures.

11. Filtre selon l'une quelconque des revendications 1 à 10, caractérisé en ce que lesdits éléments filtrants sont disposés côte à côte à l'intérieur de ladite cuve.

12. Filtre selon la revendication 11, caractérisé en ce que lesdits éléments filtrants sont disposés dans ladite cuve parallèlement les uns aux autres.

13. Filtre selon la revendication 11, caractérisé en ce que lesdits éléments filtrants sont disposés dans ladite cuve en étoile.

14. Filtre selon la revendication 7, caractérisé en ce que les supports collecteurs desdits éléments filtrants sont placés sensiblement au même niveau dans ladite cuve, et à une hauteur prédéterminée sous le sommet de ladite cuve.

15. Filtre selon l'une quelconque des revendications 1 à 14, caractérisé en ce que l'orifice d'entrée est situé au dessus des éléments filtrants.

16. Filtre selon l'une quelconque des revendications 1 à 15, caractérisé en ce qu'il comporte en outre un orifice de décompression dont l'ouie est située au dessus des éléments filtrants.

17. Installation de filtration incorporant un filtre selon les revendications 1 à 16, caractérisée en ce qu'elle comprend un réservoir d'alimentation pour le liquide à filtrer, situé à un niveau inférieur à celui du filtre, une pompe d'alimentation raccordée à l'aspiration audit réservoir et au refoulement à l'orifice d'entrée du filtre, un réservoir tampon pour les filtrats, raccordé audit orifice de sortie et situé à un niveau supérieur à celui du filtre, un bac de rétention de boues relié audit orifice d'évacuation via une vanne d'évacuation, et une tuyauterie de décompression reliant le réservoir d'alimentation, et un orifice de décompression du filtre, dont l'ouie est située au-dessus des éléments filtrants, une vanne de décompression étant montée dans ladite tuyauterie de décompression.

18. Installation de filtration selon la revendication 17, caractérisée en ce que l'orifice d'entrée du filtre est situé à un niveau intermédiaire entre les éléments filtrants et l'ouie de l'orifice de décompression.

19. Installation de filtration selon l'une des revendications 17 et 18, caractérisée en ce que ladite cuve de filtre comprend une calotte supérieure dont la hauteur est choisie de manière à piéger un volume donné d'air au sommet de la cuve.

20. Installation de filtration selon la revendication 19, caractérisée en ce qu'elle comprend un conduit de nivellement, entre la cuve de filtre et le réservoir d'alimentation, commandé par une vanne de nivellement, et dont l'ouie est située à un niveau intermédiaire entre l'ouie de l'orifice d'entrée et l'ouie de l'orifice de décompression.

21. Installation de filtration selon l'une ou l'autre des revendications 17 et 18, caractérisée en ce qu'elle comprend une tuyauterie d'équilibrage raccordée en dérivation entre la pompe et la cuve du filtre et s'élevant à une hauteur au moins égale à la pression de refoulement de la pompe, mesurée en colonne de liquide.

22. Installation de filtration selon l'une quelconque des revendications 17 à 21, caractérisée en ce que ledit réservoir tampon comprend une canne de trop-plein destinée à être raccordée à une installation d'utilisation.

23. Installation de filtration selon l'une quelconque des revendications 17 à 22, caractérisée en ce qu'elle comprend une armoire de commande assurant une commande séquentielle de ladite vanne de décompression et de ladite vanne d'évacuation.

24. Installation de filtration selon l'une quelconque des revendications 17 à 23, caractérisée en ce qu'elle comprend au moins deux filtres selon l'une des revendications 1 à 16, agencés en parallèle, un réservoir d'alimentation et une pompe d'alimentation uniques pour les deux filtres, une vanne d'alimentation pour chaque filtre, un réservoir tampon pour chaque filtre, et un bac de rétention de boues unique pour les deux filtres.

25. Installation de filtration selon la revendication 24, caractérisée en ce qu'elle comprend une armoire de commande assurant une commande séquentielle des vannes d'alimentation et des vannes d'évacuation des deux filtres.

26. Installation de filtration selon l'une quelconque des revendications 17 à 23, caractérisée en ce qu'elle comprend au moins deux filtres selon l'une des revendications 1 à 16, agencés en série, le bac de rétention de boues associé à un premier filtre constituant un réservoir d'alimentation pour le second filtre.

27. Installation de filtration selon la revendication 26, caractérisée en ce que la sortie du bac tampon associé au second filtre est raccordée au réservoir d'alimentation associé au premier filtre.

28. Installation de filtration selon l'une quelconque des revendications 17 à 23, caractérisée en ce qu'elle comprend un compresseur d'air relié à ladite cuve et une source d'un second liquide, autre que le liquide à filtrer, raccordée audit bac tampon, ledit compresseur étant mis en route à l'arrêt de la pompe d'alimentation afin de remplir ladite cuve d'air comprimé en évacuant les filtrats tout en maintenant les gâteaux de particules solides plaqués contre les toiles des éléments filtrants, ladite cuve étant ensuite remplie d'un liquide en remplacement de l'air comprimé, ledit second liquide étant utilisé pour le déchargement des gâteaux de particules par circulation à contre-courant à travers les toiles filtrantes.

29. Installation de filtration selon l'une quelconque des revendications 1 à 28, caractérisée en ce que les éléments filtrants (10) comportent des tubes collecteurs (20) en partie haute, ces derniers étant en communication avec un manifold (58) situé à l'extérieur de la cuve et au-dessus des éléments filtrants, et en ce que ledit manifold a une capacité propre à remplacer en tout ou partie ledit réservoir tampon (106).

## Claims

1. Filter (51) for liquids laden with solid particles, the filter comprising a filter vat (52) provided with an inlet orifice (60) for the liquid to be filtered, an outlet orifice (58) for the filtered liquid or filtrate, and an evacuation orifice (66) for solid particle sludge, together with a plurality of filter elements in the form of filter medium cloths (12) disposed around filter leaves (18) and arranged substantially vertically in said filter vat between inlet and outlet orifices, characterized in that said filter medium cloths (12) are shaped as elongate pockets (16) which are fitted substantially freely over said leaves (18) being provided longitudinally-extending drainage channels (30, 32), said pockets having openings (19) directed upwardly and in communication with said outlet orifice (58), and said leaves (18) being suspended beneath support members (20) fixed in said vat (52) and being free to rock sideways.

2. Filter according to claim 1, characterized in that said cloths are folded and include mutually parallel lines of stitching with said pockets being defined therebetween.

3. Filter according to claim 2, characterized in that said filter leaves are made in the form of corrugated sheets of metal or other material, the widths of the leaves corresponding to the widths of said pockets, and between the corrugations of which are defined by drainage channels.

4. Filter according to claim 3, characterized in that said filter leaves are made by means of two corrugated sheets of metal or other material which are assembled or fastened back-to-back in such a manner as to define their corrugations in the internal drainage channels and external drainage channels.

5. Filter according to claim 4, characterized in that the external channels are closed at their top ends by plugs.

6. Filter according to any one of claims 3 and 5, characterized in that said filter leaves include suspension cleats at their top ends, and characterized in that said supports include keyhole slots suitable for receiving said cleats.

7. Filter according to claim 6, characterized in that said supports are in the form of tubular manifolds, said slots constituting passage openings between said pockets and inside passage of said tubular manifolds.

8. Filter according to claim 7, characterized in that cloths include top margins which are pressed against said tubular manifolds by means of retaining plates.

9. Filter according any one of claims 3 to 8, characterized in that said filter leaves include protective covers at their bottom ends

10. Filter according to claim 9, characterized in that each of said protective covers is constituted by a V-shaped plate providing internal communication between internal drainage channels and external drainage channels in said filter leaves.

11. Filter according to any one of claims 1 to 10, characterized in that said filter elements are side-by-side inside said vat.

12. Filter according to claim 11, characterized in that said filter elements are disposed parallel to one another inside said vat.

13. Filter according to claim 11, characterized in that said filter elements are disposed inside said vat in a star configuration.

14. Filter according to claim 7, characterized in that said manifold for said filter elements are placed substantially at the same level inside said vat, and at a predetermined distance below the top of said vat.

15. Filter according to any one of claims 1 to 14, characterized in that the inlet orifice is situated below the filter elements.

16. Filter according to any one of claims 1 to 15, characterized in that it includes a decompression orifice whose inlet is situated above the filter elements.

17. Filter installation incorporating a filter according to claims 1 to 16, characterized in that it comprises a feed tank for holding liquid to be filtered, said tank being situated at a lower level than the filter, a feed pump having its suction side connected to said feed tank and having its exhaust side connected to the inlet orifice of the filter, a buffer tank for the filtrate connected to said outlet orifice and situated at higher level than the filter elements, a sludge-receiving tank fitted to said evacuation orifice via an evacuation valve and a decompression pipe connecting the feed tank with a filter decompression orifice having its inlet situated above the filter elements, with a decompression valve being mounted in said decompression pipe.

18. Filter installation according to claim 17, characterized in that said filter inlet orifice is situated at a level between the filter elements and the inlet to the decompression orifice.

19. Filter installation according to claim 17 and 18, characterized in that said filter vat includes a top cover whose height is chosen in such a manner as to trap a given volume of air in the top of the vat.

20. Filtering installation according to claim 19, characterized in that it includes a leveling duct between the filter vat and the feed tank, said duct being controlled by a leveling valve and having its inlet situated at a level between the outlet from the inlet orifice and the inlet to the decompression orifice.

21. Filter installation according to one or other of claims 17 and 18, characterized in that it includes a balancing pipe connected in parallel between the pump and the filter vat and rising to a height which is not less than the pump exhaust pressure, measured in terms of a column of liquid.

22. Filter installation according to any one of claims 17 to 21, characterized in that said buffer tank includes an overflow pipe for connection to a utilization installation.

23. Filter installation according to any one of claims 17 to 22, characterized in that it includes a control box for sequentially controlling said decompression valve and siad evacuation valve.

24. Filter installation according to any one of claims 17 to 23, characterized in that it includes at least two filters according to one of claims 1 to 16, said filters being connected in parallel, with a common feed tank and feed pump for both filters, with a feed valve specific to each filter, with a buffer tank for each filter, and with a sludge-receiving tank common to both filters.

25. Filter installation according to claim 24, characterized in that it includes a control box for sequentially controlling the feed valves and the evacuation valves of both filters.

26. Filter installation according to any one of claims 17 to 23, characterized in that it includes at least two filters according to one of claims 1 to 16, disposed in series, with the sludge-receiving tank associated with a first filter constituting a feed tank for the second filter.

27. Filter installation according to claim 26, characterized in that the outlet from the buffer tank associated with the second filter is connected to the feed tank associated with the first filter.

28. Filter installation according to any one of claims 17 to 23, characterized in that it includes air compressor connected to said vat and a source for a second liquid other than the liquid to be filtered, said source being connected to said buffer tank, said compressor being switched on when the feed pump is switched off in order to fill said vat with compressed air and remove the filtrate therefrom while maintaining the cakes of solid particles on the filter element cloths, said vat then being filled with a liquid to replace the compressed air, and said second liquid being used for removing the particle cakes by backwashing through the filter cloths.

29. Filter installation according to any one of claims 1 to 28, characterized in that the filter elements (10) have manifold tubes (20) at the tops thereof, and said manifold tubes are in communication with an outlet manifold (58) situated outside the vat above the filter elements, and wherein said outlet manifold is of sufficient capacity to totally or partially replace said buffer tank (106).

**Ansprüche**

1. Filter (51) für festkörperpartikelbeladene Flüssigkeiten, umfassend einen Filterbehälter (52) mit einer Einlaßöffnung (60) für die zu filtrierende Flüssigkeit, mit einer Auslaßöffnung (58) für das Filtrat oder die gefilterte Flüssigkeit und mit einer Ablaßöffnung (66) für die Schlämme der festen Partikel sowie einer Vielzahl von Filterelementen, die mit Hilfe von Tüchern (12) eines filtrierenden Mediums, die um Armaturen (18) angeordnet sind, gebildet sind und im wesentlichen vertikal im Filterbehälter angeordnet sind und zwischen der Einlaß- und der Auslaßöffnung liegen, dadurch gekennzeichnet, daß die Tücher (12) aus filtrierendem Medium als längliche Taschen (16) ausgebildet sind, die im wesentlichen frei auf die Armaturen (18) aufgefädelt sind, wobei letztere mit Drainagelängskanälen (30, 32) versehen, wobei die Taschen nach oben orientierte Öffnungen (19) aufweisen, die in Verbindung mit der Auslaßöffnung (58) stehen und wobei die Armaturen (18) an festen Trägern (20) des Behälters (52) aufgehängt sind, mit der Möglichkeit seitlich anzuschlagen.

2. Filter nach Anspruch 1, dadurch gekennzeichnet, daß die Tücher umgefaltet sind und parallele Nähte aufweisen, zwischen denen die Taschen definiert sind.

3. Filter nach Anspruch 2, dadurch gekennzeichnet, daß die Armaturen in Form gewellten Metalls oder anderen Materials ausgebildet sind, mit einer Breite, die der der Taschen entspricht, wobei zwischen den Wellungen die Drainagekanäle definiert sind.

4. Filter nach Anspruch 3, dadurch gekennzeichnet, daß die Armaturen aus zwei gewellten Platten aus Metall oder einem anderen Material zusammengesetzt oder Rücken an Rücken verbunden sind, um zwischen ihren Wellungen externe und interne Drainagekanäle zu bilden.

5. Filter nach Anspruch 4, dadurch gekennzeichnet, daß die externen Kanäle an ihrem oberen Ende durch Deckel verschlossen sind.

6. Filter nach einem der Ansprüche 3 und 5, dadurch gekennzeichnet, daß die Armaturen an ihrem oberen Ende Haltepflöcke aufweisen, und daß die Träger sich verengende Löcher aufweisen, die in der Lage sind, die Haltebolzen aufzunehmen.

7. Filter nach Anspruch 6, dadurch gekennzeichnet, daß die Träger in Form von Sammelrohren ausgebildet sind, wobei die Öffnungen Durchgangsöffnungen zwischen den Taschen und den inneren Passagen der Sammelrohre bilden.

8. Filter nach Anspruch 7, dadurch gekennzeichnet, daß die Tücher obere Bordüren aufweisen, die mit Hilfe von Halteplatten gegen die Sammelrohre gedrückt werden.

9. Filter nach einem der Ansprüche 3 bis 8, dadurch gekennzeichnet, daß die Armaturen an ihrem unteren Ende eine Schutzhülle aufweisen.

10. Filter nach Anspruch 9, dadurch gekennzeichnet, daß die Schutzhülle aus einer V-förmigen Platte besteht, die in ihrem Inneren eine Verbindung zwischen den externen und internen Kanälen der Armatur sicherstellen.

11. Filter nach einem der Ansprüche 1 bis 10, dadurch gekennzeichnet, daß die Filterelemente im Inneren des Behälters Seite an Seite angeordnet sind.

12. Filter nach Anspruch 11, dadurch gekennzeichnet, daß die Filterelemente im Behälter parallel zueinander angeordnet sind.

13. Filter nach Anspruch 11, dadurch gekennzeichnet, daß die Filterelemente im Behälter sternförmig angeordnet sind.

14. Filter nach Anspruch 7, dadurch gekennzeichnet, daß die Sammelträger der Filterelemente im wesentlichen auf der gleichen Höhe des Behälters angeordnet sind und in einer Höhe, die in einem vorbestimmten Bereich unter dem Scheitel des Behälters liegt.

15. Filter nach einem der Ansprüche 1 bis 14, dadurch gekennzeichnet, daß die Einlaßöffnung oberhalb der Filterelemente liegt.

16. Filter nach einem der Ansprüche 1 bis 15, dadurch gekennzeichnet, daß weiters eine Dekompressionsöffnung vorgesehen ist, deren Öffnung oberhalb der Filterelemente angeordnet ist.

17. Filtervorrichtung mit einem Filter nach einem der Ansprüche 1 bis 16, dadurch gekennzeichnet, daß sie einen Versorgungstank für die zu filtrierende Flüssigkeit aufweist, der unterhalb des Filters angeordnet ist, weiters eine Versorgungspumpe, die saugseitig mit dem Tank und druckseitig mit der Einlßöffnung des Filters verbunden ist, mit einem Zwischenreservoir für die Filtrate, das mit der Ausgangsöffnung verbunden ist und sich oberhalb des Filters befindet, einer Rückhaltewanne für die Schlämme, die mit der Ablaßöffnung über ein Ablaßventil verbunden ist und einer Dekompressionsleitung, die zum Vorratstank führt und einer Dekompressionsöffnung des Filters, deren Mündung oberhalb der Filterelemente liegt, wobei ein Dekompressionsventil in der Dekompressionsleitung vorgesehen ist.

18. Filtervorrichtung nach Anspruch 17, dadurch gekennzeichnet, daß die Einlaßöffnung des Filters in einer Höhe zwischen den Filterelementen und der Mündung der Dekompressionsöffnung liegt.

19. Filtervorrichtung nach einem der Ansprüche 17 und 18, dadurch gekennzeichnet, daß der Filterbehälter eine obere Kuppel aufweist, deren Höhe so gewählt ist, daß ein vorgegebenes Luftvolumen sich am Scheitel des Behälters befindet.

20. Filtervorrichtung nach Anspruch 19, dadurch gekennzeichnet, daß sie eine Nivellierleitung zwischen dem Filterbehälter und dem Versorgungstank aufweist, die durch ein Nivellierungsventil betätigt wird und deren Mündung in einer Höhe zwischen der Mündung der Einlaßöffnung und der Mündung der Dekompressionsöffnung liegt.

21. Filtervorrichtung nach dem einen oder anderen der Ansprüche 17 und 18, dadurch gekennzeichnet, daß sie eine Gleichgewichtsleitung aufweist, die zwischen der Pumpe und dem Filterbehälter angeschlossen ist und sich in eine Höhe erstreckt, die zumindest gleich ist dem Förderdruck der Pumpe, gemessen in Flüssigkeitshöhe.

22. Filtervorrichtung nach einem der Ansprüche 17 bis 21, dadurch gekennzeichnet, daß das Zwischenreservoir mit einem Überlauf versehen ist, der mit einer Verwendungsvorrichtung verbunden ist.

23. Filtervorrichtung nach einem der Ansprüche 17 bis 22, dadurch gekennzeichnet, daß sie eine Betätigungsschaltung aufweist, die ein aufeinanderfolgendes Betätigen des Dekompressionsventiles und des Ablaßventiles sichert.

24. Filtervorrichtung nach einem der Ansprüche 17 bis 23, dadurch gekennzeichnet, daß sie zumindest zwei Filter nach einem der Ansprüche 1 bis 16 aufweist, die parallel angeordnet sind, einen Versorgungstank und eine Versorgungspumpe, die für beide Filter gemeinsam angeordnet sind und einem Versorgungsventil für jedes Filter, einem Zwischenreservoir für jedes Filter und einer Rückhaltewanne für die Schlämme gemeinsam für beide Filter.

25. Filtervorrichtung nach Anspruch 24, dadurch gekennzeichnet, daß sie eine Betätigungsschaltung aufweist, die das aufeinanderfolgende Betätigen der Versorgungsund Ablaßventile der beiden Filter sichert.

26. Filtervorrichtung nach einem der Ansprüche 17 bis 23, dadurch gekennzeichnet, daß sie zumindest zwei Filter nach einem der Ansprüche 1 bis 16 in Serie geschaltet, aufweist, wobei die Rückhaltewanne für die Schlämme, die dem ersten Filter zugeordnet ist, den Versorgungstank für das zweite Filter bildet.

27. Filtervorrichtung nach Anspruch 26, dadurch gekennzeichnet, daß der Auslaß des Zwischentanks, der dem zweiten Filter zugeordnet ist, mit dem Versorgungstank des ersten Filters verbunden ist.

28. Filtervorrichtung nach einem der Ansprüche 17 bis 23, dadurch gekennzeichnet, daß sie einen Luftkompressor aufweist, der mit dem Behälter verbunden ist und eine Quelle einer zweiten Flüssigkeit, die von der zu filtrierenden Flüssigkeit verschieden ist, die mit dem Zwischentank verbunden ist, wobei der Kompressor beim Stillstand der Versorgungspumpe in Betrieb genommen wird, um den Behälter mit komprimierter Luft zu füllen und so die Filtrate auszubringen, wobei die Filterkuchen gegen die Tücher der Filterelemente gepreßt bleiben und der Behälter in der Folge mit einer Flüssigkeit gefüllt wird, die komprimierte Luft ersetzt, wobei die zweite Flüssigkeit verwendet wird, um die Filterkuchen durh Gegenstromzirkulation durch die Filtertücher zu entfernen.

29. Filtervorrichtung nach einem der Ansprüche 1 bis 28, dadurch gekennzeichnet, daß die Filterelemente 10 Sammelrohre 20 an ihrem oberen Teil aufweisen, wobei letztere in Verbindung mit einem Sammelrohr 58, das außerhalb des Behälters und oberhalb der Filterelemente vorgesehen ist, in Verbindung stehen und dadurch, daß das Sammelrohr eine Kapazität hat, die ausreicht, um das Zwischenreservoir (106) ganz oder teilweise zu ersetzen.

Fig-1

Fig-2

Fig-3

Fig-4

Fig-5

Fig-6

Fig-7

Fig_8

Fig-9

Fig-10